# EUROPEAN PATENT APPLICATION

(11) **EP 4 851 829 A1**
(43) Date of publication of application: **09.12.2026**
(21) Application number: 25748409.7
(22) Date of filing: 21.01.2025
(51) Int. Cl.: G06F 16/957

(54) **PAGE NAVIGATION PROCESSING METHOD, PAGE CONTENT PROVIDING METHOD, DEVICE AND STORAGE MEDIUM**

(30) Priority: 04.02.2024 CN 202410160622
(71) Applicant: Alibaba Singapore Holding Private Limited, Singapore 189554 (SG)
(72) Inventor: MAKAKHOV, Andrii, 28002 Madrid (ES); WANG, Ran, Hangzhou, Zhejiang 310052 (CN)
(74) Representative: Wu, Ting
(86) International application number: PCT/IB2025/050590
(87) International publication number: WO 2025/163423

(57) **Abstract**

The present disclosure provides a method for processing page jump and providing page content, a device, and a storage medium, by modifying a request for fetching a page source file, configuring the page source file fetch request to simultaneously fetch, while fetching the page source file, partial page content in the page as target page content, and upon responding to a page jump operation and determining that the pages before and after the jump satisfy a page association condition, replacing the target page content into the corresponding position in a Document Object Model (DOM) tree instance already rendered by the first page, and directly loading the second page based on the replaced DOM tree instance. The embodiments of the present disclosure achieve acquisition of partial content of the second page by modifying the page source file fetch request, use the partial content as the basis for loading the page, and load the second page in combination with the DOM tree instance of the already-loaded first page, without the need to render the DOM tree corresponding to the second page, thereby saving the time and software and hardware resources consumed by DOM tree rendering.

## Description

This application claims priority to Chinese Patent Application No. 202410160622.4, filed on February 4, 2024, with the China National Intellectual Property Administration, and entitled "Page Jump Processing and Page Content Providing Method, Device, and Storage Medium", the entire contents of which are incorporated herein by reference.

### TECHNICAL FIELD

The present disclosure relates to the field of information processing, and more particularly to a method, an electronic device, and a storage medium for processing page jumps, providing page content, and acquiring page files.

### BACKGROUND

In recent years, electronic transaction platforms have developed rapidly and have become a shopping channel of choice for most users, providing great convenience to consumers. Consumers typically search for desired merchandise and select items for purchase by navigating among multiple web pages and making comparisons.

During the process of accessing merchandise transaction websites, web page loading smoothness is very important for consumer experience and traffic conversion rate. In particular, when internet speeds are slow, the process of jumping from one page to another takes a long time, and stuttering or even white screen phenomena are prone to occur, resulting in poor consumer experience. The overall website browsing process is very slow, which is not conducive to consumers finding the desired merchandise in a timely manner. Page visits that do not result in transaction conversion also cause excessive meaningless consumption of hardware service resources such as consumer-side devices and website servers.

### SUMMARY

Embodiments of the present disclosure provide a method for processing page jumps, a method for providing page content, a method for acquiring page files, an electronic device, and a storage medium, to address one or more of the above technical problems.

In a first aspect, an embodiment of the present disclosure provides a method for processing page jumps, applied to a page loader, the method comprising: in response to a page jump instruction, when it is determined that a first page before the jump and a second page after the jump satisfy a page association condition, acquiring target page content of the second page; where the target page content is obtained by sending a page source file fetch request, and the page source file fetch request is configured to simultaneously acquire the target page content of the second page; replacing the acquired target page content into a corresponding position of a DOM tree instance rendered by the first page; and loading the second page based on the replaced DOM tree instance.

In a second aspect, an embodiment of the present disclosure provides a method for providing page content, applied to a server side, the method comprising: receiving a page source file fetch request, where the page source file fetch request is configured to simultaneously acquire target page content of a second page; and returning the target page content according to the page source file fetch request, where the target page content is used to, in response to a page jump instruction, when it is determined that a first page before the jump and a second page after the jump satisfy a page association condition, replace into a corresponding position of a DOM tree instance rendered by the first page, so as to load the second page based on the replaced DOM tree instance.

In a third aspect, an embodiment of the present disclosure provides a method for acquiring page files, the method comprising: in response to an acquisition condition for page content being satisfied, invoking a first API to configure a page source file fetch request to simultaneously request target page content of a second page; and acquiring the target page content returned in response to the configured page source file fetch request, where the target page content is used to, in response to a page jump instruction, when it is determined that a first page before the jump and a second page after the jump satisfy a page association condition, replace into a corresponding position of a DOM tree instance rendered by the first page so as to load the second page based on the replaced DOM tree instance.

In a fourth aspect, an embodiment of the present disclosure provides a method for processing page jumps, comprising: when displaying a first page, in response to an acquisition condition for page content being satisfied, acquiring target page content of other pages and saving the target page content in a cache of a page loader; in response to a page jump instruction, when it is determined that a first page before the jump and a second page after the jump satisfy a page association condition, extracting the target page content of the second page from the cache of the page loader; replacing the returned target page content into a corresponding position of a DOM tree instance rendered by the first page; and loading the second page based on the replaced DOM tree instance.

In a fifth aspect, an embodiment of the present disclosure provides a method for processing page jumps, comprising: in response to a page jump instruction, when it is determined that a first page before the jump and a second page after the jump satisfy a page association condition, determining that the target page content of the second page does not exist in a cache of a page loader; configuring a page source file fetch request to simultaneously acquire target page content of the second page, and receiving the target page content of the second page returned in response to the page source file fetch request; replacing the acquired target page content into a corresponding position of a DOM tree instance rendered by the first page; and loading the second page based on the replaced DOM tree instance.

In a sixth aspect, an embodiment of the present disclosure provides a method for processing page jumps, comprising: when displaying a first product detail page, in response to an acquisition condition for page content of other product detail pages being satisfied, acquiring main body content of at least one other product detail page and saving the main body content in a cache of a page loader; in response to a page jump instruction, when it is determined that the page after the jump is a second product detail page, extracting the main body content of the second product detail page from the cache of the page loader; and loading the second product detail page based on the acquired main body content.

In a seventh aspect, an embodiment of the present disclosure provides an electronic device comprising a memory, a processor, and a computer program stored on the memory, where the processor, when executing the computer program, implements any one of the methods described above.

In an eighth aspect, embodiments of the present disclosure provide a computer-readable storage medium having a computer program stored therein, the computer program, when executed by a processor, implementing any one of the methods described above.

In a ninth aspect, embodiments of the present disclosure provide a computer program product comprising computer program/instructions that, when executed by a processor, implement any one of the methods described above.

Compared with the related art, the present disclosure has the following advantages:
according to the embodiments of the present disclosure, the request for acquiring a page source file is modified by configuring the page source file fetch request to acquire, simultaneously with the page source file, a portion of the page content as the target page content; upon responding to a page jump instruction and determining that the pages before and after the jump satisfy the page association condition, the target page content obtained in the foregoing manner is replaced into the corresponding position in the DOM tree instance already rendered by the first page, so that the second page can be loaded directly based on the replaced DOM tree instance. It can be seen that the embodiments of the present disclosure, by modifying the page source file fetch request, achieve the acquisition of a portion of the content of the second page, and use that partial content as the basis for loading the page, combined with the DOM tree instance of the already-loaded first page to load the second page, without the need to render the DOM tree instance corresponding to the second page, thereby saving the time and software/hardware resources consumed by rendering the DOM tree instance, improving the speed of loading the second page, and optimizing the visual experience of page jumping. In electronic transaction scenarios, this enables consumers to browse and select desired products more quickly, increases the number of pages viewed per unit time, raises the likelihood of finding desired products, improves the conversion rate of page traffic into transaction orders, and also introduces more traffic to the pages and the platform. Since the required target page content is acquired directly without the need to parse content from the page source file, the time consumed in loading the second page can also be reduced.

The above-mentioned modification of the page source file fetch request may be triggered before responding to the page jump instruction, when the acquisition condition for page content is satisfied, that is, the target page content of the second page is obtained in advance before it is determined to jump to the second page, so that after responding to the instruction to jump to the second page, the pre-fetched and saved target page content can be directly obtained, further reducing the time required to load the second page and making the visual effect of page jumping smoother.

Here, after providing the target page content of the second page, the server may save the target page content into the cache of the front-end server, so that when other terminals request the target page content of the second page, they can directly obtain the target page content from the front-end server without further retrieval from the back-end server, thereby improving the page loading efficiency of the second page for multiple terminals.

In the above process of loading the second page, the second API built into the page loader may first be called to load the animation effects from the cascading style sheet (CSS), and through smooth fade-out of the first page and fade-in of the second page animations, a smooth and seamless page jump effect can be achieved, improving the visual experience of page jumping, enhancing website stickiness, and attracting more visit traffic.

Moreover, upon determining that the first page belongs to a multi-page application (MPA), the multi-page application (MPA) may be configured as a single-page application (SPA), so that the modified single-page application (SPA) can directly call the second API built into the page loader, enabling the above effects to be applied to various types of page loaders.

The above description is merely an overview of the technical solutions of the present disclosure. In order to more clearly understand the technical means of the present disclosure, implementations may be carried out in accordance with the content of the specification, and in order to make the above and other objectives, features, and advantages of the present disclosure more apparent and understandable, specific embodiments of the present disclosure are set forth below.

### BRIEF DESCRIPTION OF THE DRAWINGS

In the drawings, unless otherwise specified, the same reference numerals throughout the drawings represent the same or similar components or elements. The drawings are not necessarily drawn to scale. It should be understood that these drawings depict only some embodiments according to the present disclosure and should not be considered as limiting the scope of the present disclosure.
FIG. 1 illustrates a schematic diagram of data interaction for page jump in the related art;
FIG. 2 illustrates a schematic diagram of data interaction during page jumping in one example of an embodiment of the present disclosure;
FIG. 3 illustrates a schematic diagram of data interaction during page jumping in another example of an embodiment of the present disclosure;
FIG. 4 illustrates a flowchart of a method for processing page jumping provided in an embodiment of the present disclosure;
FIG. 5 illustrates a flowchart of a method for providing page content provided in an embodiment of the present disclosure;
FIG. 6 illustrates a flowchart of a method for acquiring page files provided in an embodiment of the present disclosure;
FIG. 7 illustrates a flowchart of a method for processing page jumping provided in an embodiment of the present disclosure;
FIG. 8 illustrates a flowchart of a method for processing page jumping provided in an embodiment of the present disclosure;
FIG. 9 illustrates a flowchart of a method for processing page jumping provided in an embodiment of the present disclosure;
FIG. 10 illustrates a structural block diagram of a page jump processing apparatus provided in an embodiment of the present disclosure;
FIG. 11 illustrates a structural block diagram of a page content providing apparatus provided in an embodiment of the present disclosure;
FIG. 12 illustrates a structural block diagram of a page file acquisition apparatus provided in an embodiment of the present disclosure;
FIG. 13 illustrates a structural block diagram of a page jump processing apparatus provided in an embodiment of the present disclosure;
FIG. 14 illustrates a structural block diagram of a page jump processing apparatus provided in an embodiment of the present disclosure;
FIG. 15 illustrates a structural block diagram of a page jump processing apparatus provided in an embodiment of the present disclosure;
FIG. 16 illustrates a block diagram of an electronic device for implementing embodiments of the present disclosure.

### DETAILED DESCRIPTION OF THE EMBODIMENTS

In the following, only certain exemplary embodiments are briefly described. As those skilled in the art would recognize, the described embodiments may be modified in various different ways without departing from the spirit or scope of the present disclosure. Accordingly, the drawings and description are to be regarded as illustrative in nature, rather than restrictive.

To facilitate understanding of the technical solutions of the embodiments of the present disclosure, the following provides an explanation of the related technologies of the embodiments of the present disclosure. The following related technologies, as optional solutions, may be combined in any manner with the technical solutions of the embodiments of the present disclosure, and all fall within the protection scope of the embodiments of the present disclosure.

In the related art, web page loading technologies are generally classified into SSR (Server-Side Rendering) and CSR (Client-Side Rendering). Taking browser-based web page loading as an example, SSR rendering works as follows: after the browser initiates a page request, the server completes the assembly of the HTML (HyperText Markup Language) file and sends it to the browser, and the browser parses the HTML file and renders a page with content; in the CSR rendering process, after the browser requests the page, the server first returns to the browser an HTML file without specific content as a page framework, and the browser further generates a complete HTML file based on the page framework, dynamically rendering the page content and data into the page, thereby completing the display of the page. Since client-side rendering requires dynamically creating a complete HTML file and involves executing a relatively large amount of code, the first-screen performance is relatively slow; by comparison, under the server-side rendering approach, the client can obtain from the server an HTML file that can be directly displayed, which can optimize the first-screen display experience.

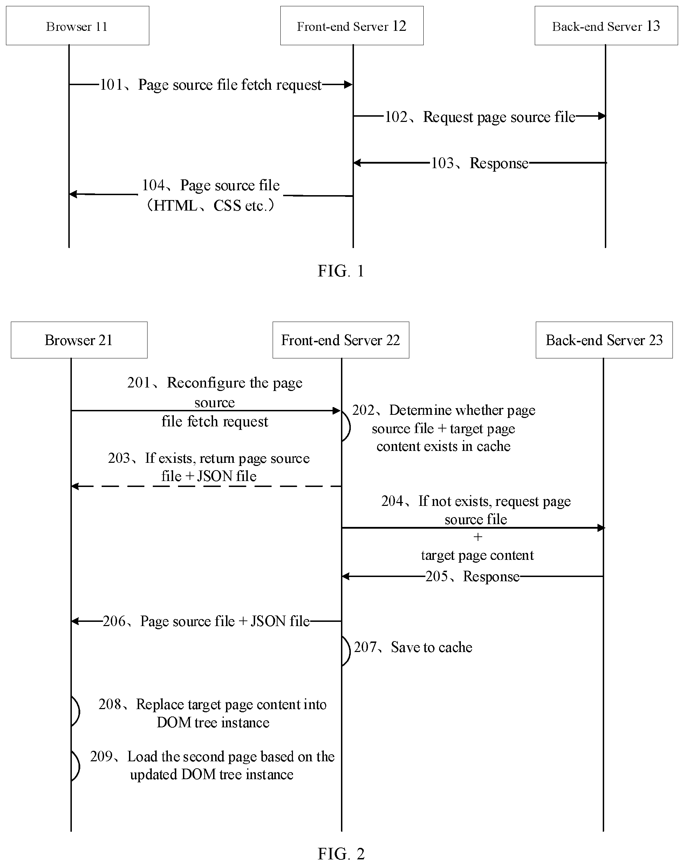

FIG. 1 shows a schematic diagram of the interaction between a browser and a server during page navigation in the related art. Taking the navigation between product detail pages (PDP) of an electronic transaction website as an example, a product detail page corresponding to one product typically also recommends other products, and by accessing other products, the product detail pages of those other products can be further opened. From the perspective of data interaction, when a user clicks on a product in a PDP page, browser 11 executing operation 101 initiates a fetch request for another PDP page corresponding to the product, the fetch request indicates fetching the page source file of the PDP page, and through front-end server 12 executing operation 102, a page source file is requested from back-end server 13, the back-end server searches for the page source file corresponding to the PDP page and executes operation 103 to respond to the front-end server, the front-end server executes operation 104 to send the page source file to the browser, and the browser loads the PDP page according to the page source file.

For different types of web pages, the loading process at the browser end differs. For a multi-page application (MPA), each page is a separate and complete page; when navigating to a new page within the same website, each page needs to send an HTTP request to the server to re-fetch the corresponding HTML, CSS (Cascading Style Sheets), JS (JavaScript), and other page source files, and further loads the navigated page based on the re-fetched page source files. A single-page application (SPA), on the other hand, includes a shell page and multiple page fragments that share a common base framework; when navigating to a new page within the same website, the corresponding page source files are re-fetched from the server, and the browser extracts from the new HTML file the page content that differs from the previous page and needs to be updated, and loads the content that needs to be updated into the previous page.

An embodiment of the present disclosure provides a page jump processing scheme. As shown in FIG. 2, an interaction diagram between a browser and a server in an example page jump processing scheme of an embodiment of the present disclosure is provided. When a website is accessed via browser 21, the server returns to the browser the page source file corresponding to the website, including a JS (JavaScript) file for executing page-related processing. After a user clicks on a product in a PDP page, the JS code executes a determination and confirms that it is a jump between PDP pages, then further executes operation 201 to reconfigure the page source file fetch request, so that the page source file fetch request sent to front-end server 22 simultaneously requests, while acquiring the page HTML file, partial page content of the page after the jump (referred to as target page content). For example, the target page content includes content identified by keywords such as meta (used to describe HTML file attributes) and content (web page content) in the page source file. The front-end server executes operation 202 to search the cache for any previously acquired page source files and target page content. If such content exists, operation 203 is executed to organize the target page content into JSON (JavaScript Object Notation) file format and return it together with the HTML file to the browser; the browser executing operation 208 can directly replace the JSON file into the corresponding position of the already-rendered DOM (Document Object Model) tree instance of the previous PDP page to generate a new DOM tree instance; performing Hydrate hydration operation on the updated DOM tree instance can cause the DOM tree instance to be converted from a string into usable components; operation 209 is executed to load the hydrated DOM tree instance to display the PDP page after the jump. If such content does not exist, operation 204 is executed to request the page source file and target page content from back-end server 23; after back-end server executes operation 205 and responds, the front-end server executes operation 206 to return the page source file and the target page content organized in JSON format to the browser.

In this way, by modifying the page source file fetch request to directly acquire partial content of the PDP page after the jump, the acquired partial content serves as the basis for loading the page, and the second page is loaded by combining it with the DOM tree instance that has already been loaded from the previous page. Compared to the approach of a multi-page application (MPA) directly re-rendering the DOM tree instance based on the HTML file of the PDP page after the jump, this approach saves the time and software/hardware resources consumed by rendering the DOM tree instance, improves page loading efficiency, optimizes the visual experience of page jumping, and in electronic transaction scenarios, enables consumers to browse and select desired merchandise more quickly, increases the number of pages browsed per unit of time, increases the likelihood of finding desired merchandise, improves the conversion rate of page traffic into transaction orders, and also introduces more traffic to pages and the platform. Since the required target page content is acquired directly, without the need to perform the operation of parsing content from the page source file, the time consumed in loading the PDP page after the jump can be saved. Compared to the page loading process of a single-page application (SPA), the browser in the embodiments of the present disclosure does not need to extract updated page content from the HTML file; instead, it can directly request from the server the page content that can be filled into the DOM tree instance of the previous PDP page, thereby saving complex browser operations and also improving the efficiency of page jumping.

After providing the target page content of the post-jump PDP page, the front-end server may execute 207 to save the target page content into the cache of the front-end server. Subsequently, if the same terminal or another terminal requests the target page content of the PDP page, the target page content may be directly retrieved from the cache of the front-end server without the need to further obtain it from the back-end server, thereby improving the loading efficiency of the post-jump PDP page for multiple terminals. Applying this to the present example, the aforementioned process of first searching the cache to determine whether the target page content saved when the same terminal or another terminal previously acquired the PDP page exists therein, and if so, executing the return of the page source file and the JSON file without the need to further obtain them from the back-end server, saves the time and resources consumed by interactions with the back-end server.

In order to achieve better visual effects during page jumping, in the process of loading the PDP after the jump, animation effects pre-configured in the CSS (Cascading Style Sheets) may be loaded first, for example, configured as a smooth fade-out of the first page and fade-in of the second page animation effect, so that page jumping is smooth and seamless, the visual experience is comfortable and natural, and this helps enhance website stickiness and attract more traffic. The animation effects added during page transitions can be implemented by calling a pre-configured or browser built-in View Transition API (Application Programming Interface).

In some cases, the browser's built-in view transition API can only be applied to certain types of websites; for example, the Chrome browser's built-in View Transition API can only be applied to single-page applications (SPA). In order to apply the aforementioned animation effects to a multi-page application (MPA) to achieve a better visual experience for users, upon determining that the previous PDP page belongs to a multi-page application, the multi-page application may be configured as a single-page application, so that the reconfigured single-page application can directly call the browser's built-in View Transition API.

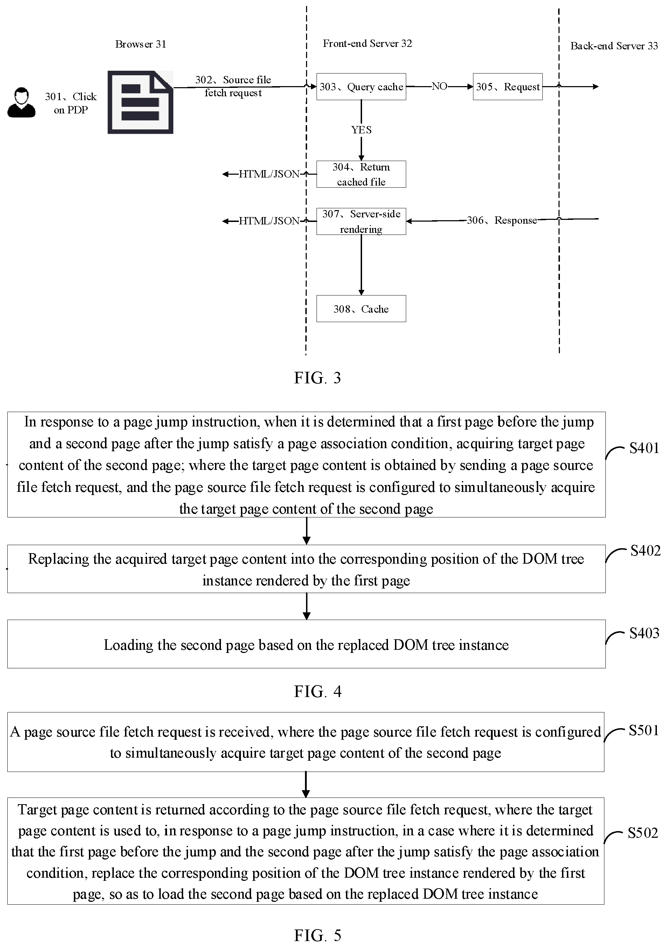

As shown in FIG. 3, a data interaction diagram of a method for processing page jumping in another example of an embodiment of the present disclosure is provided. After a user performs step 301 of clicking a PDP page, the browser 31 performs step 302 of initiating an asynchronous request to the front-end server 32 for acquiring a page source file of the PDP page, where the request is configured to simultaneously acquire target page content of the PDP page. The front-end server performs step 303 of determining whether page content corresponding to the PDP page exists in the local cache. In the case where such page content exists, the front-end server performs step 304 of returning the HTML file in the cache and the JSON file of the target page content. In the case where the page content corresponding to the PDP page does not exist, the front-end server performs step 305 of initiating a request to the back-end server 33, and based on the page data of the PDP page returned after the back-end server performs step 306 in response, performs step 307 of server-side rendering to generate an HTML file, and based on generating a JSON file corresponding to the target page content, returns the HTML file and the JSON file together to the browser, and performs step 308 of caching both files to the front-end server locally. The browser replaces the target page content in the JSON file into the corresponding position of the DOM tree instance of the previous page, and obtains the PDP page after the jump by rendering the replaced DOM tree instance.

When the page jump processing scheme corresponding to the embodiments of the present disclosure is implemented on the browser side, the corresponding virtual apparatus module may be deployed in the JS code returned by the server for the website to which the page belongs, or may be deployed in the browser or in the page HTML file. Taking JS code as an example, the JS code may be mounted on a front-end server, a back-end server, or a CDN (Content Delivery Network) server located closer to the terminal where the browser is situated (to facilitate rapid execution of JS code), and the JS code is returned to the browser when the browser accesses a page or accesses the website corresponding to the page for the first time. The modification operation on the page source file fetch request may be implemented by calling an API pre-configured on the server or at another location, and loading animation effects from CSS files may be implemented by calling the view transition effect API built into the browser. Correspondingly, when the page jump processing scheme corresponding to the embodiments of the present disclosure is implemented on the server side, the corresponding virtual apparatus module may be implemented as an application, service, instance, or software-form functional module, deployed on a virtual machine (VM), container, cloud server, or hardware device with data processing capability (such as a server or terminal device) or hardware chip (such as a CPU (Central Processing Unit), GPU (Graphics Processing Unit), FPGA (Field-Programmable Gate Array), NPU (Neural Processing Unit), AI (Artificial Intelligence) accelerator card, or DPU (Data Processing Unit)).

It should be noted that user information (including but not limited to user device information, user personal information, etc.) and data (including but not limited to data used for analysis, stored data, displayed data, etc.) involved in the present disclosure are information and data that have been authorized by users or have been fully authorized by all parties, and the collection, use, and processing of relevant data must comply with the relevant laws, regulations, and standards of the relevant regions, and corresponding operation entries are provided for users to choose to authorize or refuse.

The following provides a detailed description of the technical solutions of the present disclosure and how the technical solutions of the present disclosure solve the aforementioned technical problems through specific embodiments. Several specific embodiments listed may be combined with each other, and the same or similar concepts or processes may not be repeated in certain embodiments. The embodiments of the present disclosure will be described in detail below in conjunction with the accompanying drawings.

### First Embodiment:

Embodiments of the present disclosure provide a method for processing page jump. As shown in FIG. 4, a flowchart of a method for processing page jump 400 according to an embodiment of the present disclosure is illustrated, and the method 400 may include:
In step S401, in response to a page jump instruction, when it is determined that a first page before the jump and a second page after the jump satisfy a page association condition, acquiring target page content of the second page; where the target page content is obtained by sending a page source file fetch request, and the page source file fetch request is configured to simultaneously acquire the target page content of the second page.

A page jump instruction may be triggered in response to a condition for page jump being satisfied, for example, a user clicking on a product in a PDP page triggering a jump to another PDP page, or a voice instruction indicating a page jump being detected, etc. The page before the jump is referred to as the first page, and the page after the jump is referred to as the second page. The first page and the second page satisfying the page association condition means that the second page has the same or similar page framework or page content, so that during the loading process of the second page, the rendering result of the first page may be borrowed, such as the already-rendered page framework or page content, thereby reducing the time spent on loading the page. In an embodiment, the first page and the second page may be two pages having the same page framework, where the header, footer, and positions related to the page framework have the same display content; in this way, during the rendering process of the second page, there is no need to re-render the DOM tree instance, and the main body content other than the page framework can be directly added to the DOM tree instance that has already been rendered for the first page, thereby simplifying the loading process of the second page and reducing the time spent on page jumps. The first page and the second page may be pages of a single-page application or pages of a multi-page application.

In response to a page jump instruction, first confirming that the first page and the second page satisfy the page association condition; when the page association condition is satisfied, it indicates that the rendering of the second page can borrow the rendering result of the first page; by acquiring the target page content of the second page and combining the target page content with the rendering result of the first page, the loading process of the second page is accelerated.

The target page content described above is obtained by sending a page source file fetch request. The page source file fetch request was originally used to indicate fetching the page source file corresponding to the page. In the embodiments of the present disclosure, the page source file fetch request has been improved and configured to simultaneously fetch the target page content while fetching the page source file. In one example, the target page content of the second page is acquired after receiving a page jump instruction; in response to the page jump instruction, the page source file fetch request is modified, and the page source file fetch request to be sent is configured to simultaneously fetch the target page content of the second page while fetching the page source file, and then the configured page source file fetch request is sent to the server. In another example, before receiving the page jump instruction, once it is determined that the acquisition condition for page content is satisfied, acquisition of the target page content of the second page may be triggered; after detecting that the acquisition condition for page content is currently satisfied, the page source file fetch request is modified, and the page source file fetch request is configured to simultaneously fetch the target page content of the second page while fetching the page source file, and then the configured page source file fetch request is sent to the server, so as to obtain the target page content returned simultaneously with the HTML file returned by the server; subsequently, upon receiving the page jump instruction, the pre-acquired target page content is extracted for loading the second page.

The target page content refers to partial content displayed in the second page, used to be combined with the rendering result of the first page. The required target page content to be acquired may be indicated in the page source file fetch request, for example, by adding one or more pieces of information such as the content type, HTML tag, and storage location of the target page content as a page content identifier for identifying the target page content in the page source file fetch request, thereby facilitating simultaneous acquisition of the target page content according to the page source file fetch request. In one example, the target page content is the main body content of the second page, and meta and content HTML tags are added as page content identifiers in the page source file fetch request. The meta tag is an important tag in an HTML file, located between the head tag and the title tag, and is used to describe the attributes of the HTML file, such as author, date and time, webpage description, keywords, page refresh, etc. The content attribute is used to provide a value associated with the http-equiv attribute or the name attribute, and the content attribute is typically associated with the <meta> element and contains single-value text used to specify meta-information content.

In step S402, replacing the acquired target page content into the corresponding position of the DOM tree instance rendered by the first page.

The process of loading a page from page source files such as HTML files, CSS files, and JS code generally includes: first, running JS code to parse the HTML file from top to bottom, constructing a DOM tree instance composed of DOM element nodes, where the DOM tree instance includes all elements of the page; second, parsing the CSS file to generate a CSS rule tree, and merging the DOM tree instance with the CSS rule tree, where the merged DOM tree instance includes all visible elements on the page with certain header tags and invisible tags hidden; then, parsing page tags in the DOM tree instance that reference external resources and those that do not reference external resources, filling page content into the DOM tree instance, and rendering the page according to the filled DOM tree instance. The embodiments of the present disclosure improve upon the aforementioned rendering process by combining the target page content with the DOM tree instance that has been rendered for the first page, and replacing the previously acquired target page content into the corresponding position in the DOM tree instance of the first page. Specifically, the content to be replaced in the first page - that is, the content that needs to be replaced with the target page content of the second page - may be configured as hidden display or directly deleted, and the target page content is written at the position of the content to be replaced.

In step S403, loading the second page based on the replaced DOM tree instance.

By adding the target page content to the DOM tree instance, page loading can further proceed based on the replaced DOM tree instance. The loading of the second page is achieved through the combination of the target page content and the DOM tree instance of the first page. Compared to the page loading process of the aforementioned multi-page application (MPA), the solution of the embodiments of the present disclosure simplifies the loading process of the second page, eliminating the need for the step of re-rendering the DOM tree instance corresponding to the second page according to the HTML file corresponding to the second page, thereby saving the time and software/hardware resources consumed in rendering the DOM tree instance, improving page loading efficiency, and optimizing the visual experience of page jumps. In electronic transaction scenarios, this enables consumers to browse and select desired merchandise more quickly, increases the number of pages browsed per unit time, raises the likelihood of finding desired merchandise, improves the conversion rate of page traffic into transaction orders, and also introduces more traffic to pages and platforms. Compared to the page loading process of a single-page application, since there is no need to extract the target page content from the HTML file of the second page, but instead the target page content can be obtained by modifying the page source file fetch request, complex browser operations are reduced and the efficiency of page jumps is also improved.

This embodiment may be applied to a page loader, which is used to implement page loading and may be a browser or other application capable of loading web pages. In an implementation, the operation of modifying the page source file fetch request may be implemented by the page loader, by code inserted into the page, or by JS code returned to the page loader when accessing the website. Taking JS code implementation as an example, the JS code monitors page-related trigger conditions or operations, and executes this embodiment when a page jump is triggered and a page jump instruction is detected.

In an embodiment of the present disclosure, in one example, the step of acquiring the target page content of the second page may be: after receiving the page jump instruction, acquiring the target page content from the server by modifying the page source file fetch request so that the page source file fetch request carries a target page content identifier corresponding to the target page content, and instructs the server to return the requested target page content while returning the page source file. In another example, the target page content may also be pre-fetched from the server in response to satisfying an acquisition condition for page content before the page jump instruction is received; in this case, the step of acquiring the target page content of the second page may be: in response to the acquisition condition for page content, configuring the page source file fetch request to simultaneously request the target page content, and saving the returned target page content in the cache of the page loader, so that the target page content can be extracted from the cache after a subsequent page jump instruction is received.

For the two examples, the function of reconfiguring the page source file fetch request sent to the server can be encapsulated as an API, referred to as the first API, which may be configured in the code of an HTML file, in JS code, or at a designated position of the page loader. By calling the first API to modify the page source file fetch request, the request that originally only fetched the page source file is made to simultaneously indicate the fetching of the target page content of the second page. In order for the modified page source file to specify the particular information to be acquired, the page source file fetch request may be configured to carry a target page content identifier corresponding to the target page content; the server can acquire the corresponding target page content according to the target page content identifier; the page content identifier may be one or more of the content type of the page content, HTML tags, storage location, and other information, where the HTML tags may be one or more of meta and content. The server can find the corresponding target page content according to the page content identifier carried in the page source file fetch request, and may organize the target page content into a JSON file to return to the page loader.

In an implementation, after each acquisition of page content, the page content may be saved in a storage location associated with the page loader, so that the next time the same page content is requested, the target page content can be directly extracted from the storage location associated with the page loader without further requesting from the server, thereby saving the time and software and hardware resources consumed by page jumping. Therefore, before invoking the first API to modify the page source file fetch request, it is possible to first check whether the cache associated with the page loader contains the target page content corresponding to the second page; if the cache contains the target page content corresponding to the second page, the target page content can be directly extracted from the cache; if not, the target page content is acquired from the server by reconfiguring the page source file fetch request. After the target page content does not exist in the cache associated with the page loader and is acquired from the server, the acquired target page content may be stored in the cache associated with the page loader for retrieval when the target page content is needed.

The above-mentioned acquisition condition for page content refers to triggering the acquisition of page content when the acquisition condition is detected to be satisfied; the page content acquired here may include page content corresponding to one or more pages that may be subsequently navigated to.

The acquisition condition for page content described above may be configured according to actual scenarios and needs. In one example, the acquisition condition may include detecting that a page focus point is located at the position of a first type of data object in the first page. The mouse hover position on the page, the position of a touch point on a touchscreen, the page position indicated by the direction the user's face is pointing, and the like may be used as the page focus point. If the page focus point is located at the position of a first type of data object in the first page, the position of the first type of data object may be a display position or an access entry of the first type of data object. Taking an electronic transaction scenario as an example, the first type of data object may be other product objects in the PDP (Product Detail Page) page other than the displayed product object. If the mouse hover position corresponds to the display position of a certain product object, and that display position is typically also the access entry of the product object, then it is determined that the acquisition condition for the target page content in the PDP (Product Detail Page) page corresponding to that product object is satisfied. In another example, the acquisition condition for page content may include detecting that a second type of data object satisfying an interaction condition exists in the first page. Satisfying the interaction condition indicates that the probability of further accessing the second type of data object is relatively high, and the efficiency of page jumping may be improved by prefetching page content in advance. For example, if the interaction condition is determined to be that the access frequency exceeds a set threshold or that the data object belongs to a hot category, then when the first page is displayed, by identifying one or more product objects among those in the first page other than the displayed product object whose historical access frequency is relatively high or that belong to a hot category, the target page content corresponding to the PDP page corresponding to one or more product objects satisfying the interaction condition may be prefetched and saved into the cache corresponding to the page loader. The acquisition condition for page content may include one or more of the above conditions. Both the acquisition condition and the interaction condition may be configured according to actual needs, and the present disclosure does not impose any limitation thereon.

In an implementation, the server may organize the target page content into a JSON file and return it to the page loader. When replacing the acquired target page content into the corresponding position of the DOM tree instance rendered by the first page, after acquiring the target page content returned in response to the configured page source file fetch request, the page content corresponding to the target page content identifier in the DOM tree instance of the first page may be deleted, or the page content corresponding to the target page content identifier may be modified to hidden display, and the target page content is filled into the content region corresponding to the target page element, so that after the modified DOM tree instance corresponding to the first page is loaded, the target page content corresponding to the second page is displayed.

In an embodiment, during the process of loading the second page based on the replaced DOM tree instance, a Hydrate hydration operation is first performed on the replaced DOM tree instance, that is, the string of the DOM tree instance is converted into interactive components, so that the hydrated DOM tree instance correspondingly can be loaded as an interactive page; then an API in the page loader (referred to as the second API) is called to load the animation effects from the CSS file; and thereafter the second page is loaded based on the hydrated DOM tree instance. The second API may be the Chrome browser's built-in View Transition view transition API, with the monitoring function for page jump events pre-configured in the DOM tree instance, so that when a page jump event is detected, the animation effects of part of the content under the DOM tree instance in the CSS file are replaced. The View Transition API adds animations when switching between pages to create a set of transition images representing the image before the page state transition and the image after the page state transition, for example with a fade-in and fade-out transition effect, thereby reducing the cognitive load and perceived loading delay caused by page jumps.

The first page and the second page satisfy the page association condition, so that the rendering of the second page can borrow the rendering result of the first page. In an implementation, determining that the first page before the jump and the second page after the jump satisfy the page association condition may be: determining that the first page before the jump and the second page after the jump each correspond to a set page type, for example, both are PDP pages. Other page association conditions may also be defined, such as determining whether the first page and the second page belong to the same designated website, and whether the first page and the second page have the same header and footer.

In an implementation, when it is determined that the first page before the jump and the second page after the jump satisfy the page association condition, if it is determined based on the first page belonging to a multi-page application that the second API (e.g., View Transition API) cannot be invoked, the multi-page application may be configured as a single-page application, so that the modified single-page application can directly invoke the second API built into the page loader.

In an implementation, after the target page content of the second page is acquired, it may be saved in the cache of the page loader for direct retrieval upon next use, saving the time consumed by fetching from the server.

### Second Embodiment:

From the perspective of the server side, embodiments of the present disclosure provide a method for providing page content. As shown in FIG. 5, a flowchart of a method for providing page content 500 according to an embodiment of the present disclosure is illustrated, and the method 500 may include:
In step 501, a page source file fetch request is received, where the page source file fetch request is configured to simultaneously acquire target page content of the second page.
In step 502, target page content is returned according to the page source file fetch request, where the target page content is used to, in response to a page jump instruction, in a case where it is determined that the first page before the jump and the second page after the jump satisfy the page association condition, replace the corresponding position of the DOM tree instance rendered by the first page, so as to load the second page based on the replaced DOM tree instance.

In an embodiment, when returning target page content according to the page source file fetch request, the target page content may be extracted from the page source file of the second page based on the target page content identifier indicated by the page source file fetch request, so as to further encapsulate the target page content into a JSON file and return it together with the page source file to the page loader.

In an embodiment, before extracting the target page content from the page source file of the second page based on the target page content identifier indicated by the page source file fetch request, it may first be determined whether the target page content corresponding to the second page exists in the server-side local cache; if it exists, the target page content may be directly retrieved locally from the front-end server, saving the time spent fetching the file from the back-end server; if it does not exist, the target page content is further obtained from the back-end server.

In an embodiment, after acquiring the target page content corresponding to the second page, the target page content may also be saved to the cache of the front-end server, so that when the same terminal or different terminals subsequently request the target page content, the target page content can be retrieved directly from the cache of the front-end server.

### Third Embodiment:

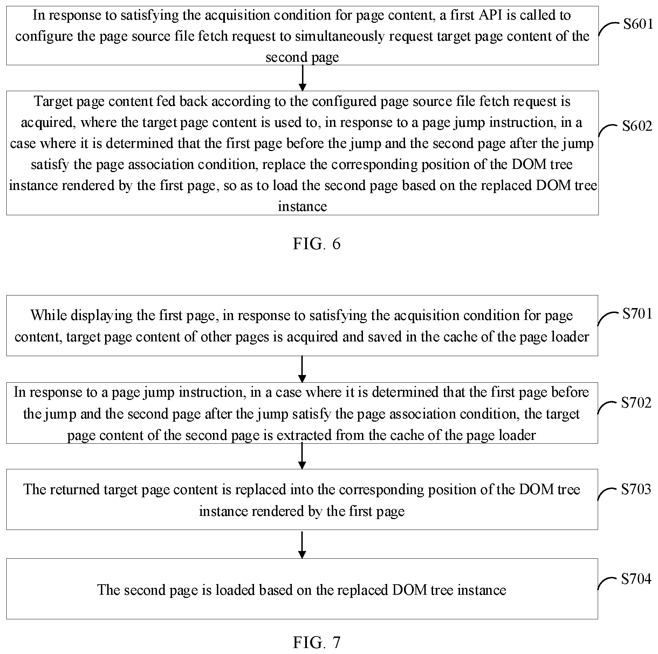

Target page content may be acquired in response to a page jump instruction, or may be acquired before receiving the page jump instruction. The following provides an embodiment from the perspective of acquiring target page content. FIG. 6 illustrates a flowchart of a method 600 for acquiring page files according to an embodiment of the present disclosure, the method 600 may include:
In step S601, in response to satisfying the acquisition condition for page content, a first API is called to configure the page source file fetch request to simultaneously request target page content of the second page.
In step S602, target page content fed back according to the configured page source file fetch request is acquired, where the target page content is used to, in response to a page jump instruction, in a case where it is determined that the first page before the jump and the second page after the jump satisfy the page association condition, replace the corresponding position of the DOM tree instance rendered by the first page, so as to load the second page based on the replaced DOM tree instance.

### Fourth Embodiment:

The following provides an embodiment directed to a scheme for acquiring target page content in advance. FIG. 7 illustrates a flowchart of a method 700 for processing page jump according to an embodiment of the present disclosure, the method 700 may include:
In step S701, while displaying the first page, in response to satisfying the acquisition condition for page content, target page content of other pages is acquired and saved in the cache of the page loader. In step S702, in response to a page jump instruction, in a case where it is determined that the first page before the jump and the second page after the jump satisfy the page association condition, the target page content of the second page is extracted from the cache of the page loader. In step S703, the returned target page content is replaced into the corresponding position of the DOM tree instance rendered by the first page. In step S704, the second page is loaded based on the replaced DOM tree instance.

### Fifth Embodiment:

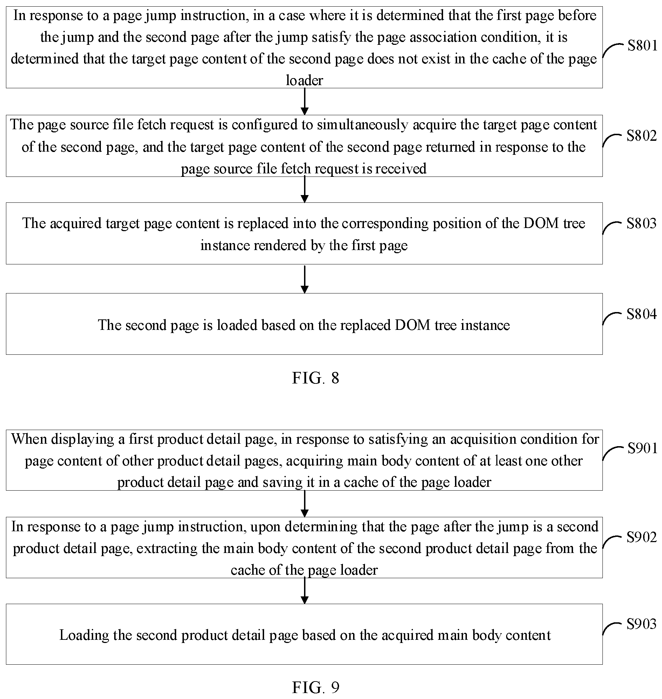

The following provides an embodiment directed to a scheme for acquiring target page content in response to a page jump request. An embodiment of the present disclosure provides a method for processing page jump. FIG. 8 illustrates a flowchart of a method 800 for processing page jump according to an embodiment of the present disclosure, the method 800 may include:
In step S801, in response to a page jump instruction, in a case where it is determined that the first page before the jump and the second page after the jump satisfy the page association condition, it is determined that the target page content of the second page does not exist in the cache of the page loader. In step S802, the page source file fetch request is configured to simultaneously acquire the target page content of the second page, and the target page content of the second page returned in response to the page source file fetch request is received. In step S803, the acquired target page content is replaced into the corresponding position of the DOM tree instance rendered by the first page. In step S804, the second page is loaded based on the replaced DOM tree instance.

### Sixth Embodiment:

The following provides an embodiment for the case where the first page and the second page are PDP (Product Detail Page) pages. As shown in FIG. 9, a flowchart of a page jump processing method 900 according to an embodiment of the present disclosure, the method 900 may include:
In step S901, when displaying a first product detail page, in response to satisfying an acquisition condition for page content of other product detail pages, acquiring main body content of at least one other product detail page and saving it in a cache of the page loader. In step S902, in response to a page jump instruction, upon determining that the page after the jump is a second product detail page, extracting the main body content of the second product detail page from the cache of the page loader. In step S903, loading the second product detail page based on the acquired main body content.

### Seventh Embodiment:

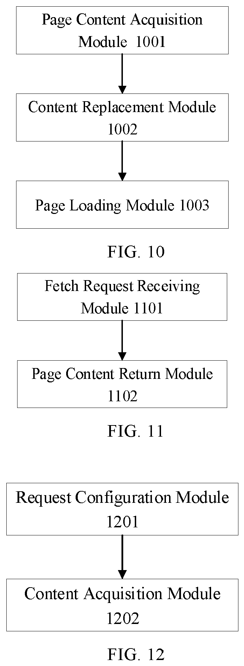

Corresponding to the above examples and method embodiments provided by the embodiments of the present disclosure, the embodiments of the present disclosure further provide a page jump processing apparatus. FIG. 10 illustrates a structural block diagram of a page jump processing apparatus 1000 according to an embodiment of the present disclosure, applied to a page loader, and the apparatus 1000 may include:
A page content acquisition module 1001, configured to, in response to a page jump instruction, upon determining that the first page before the jump and the second page after the jump satisfy a page association condition, acquire target page content of the second page; wherein the target page content is obtained by sending a page source file fetch request, and the page source file fetch request is configured to simultaneously acquire target page content of the second page. A content replacement module 1002, configured to replace the acquired target page content into the corresponding position of the DOM tree instance rendered by the first page. A page loading module 1003, configured to load the second page based on the replaced DOM tree instance.

In an implementation, the page content acquisition module comprises: a request modification sub-module, configured to invoke a first API to modify the page source file fetch request so that the page source file fetch request simultaneously requests acquisition of target page content of the second page while requesting acquisition of the page source file, wherein the modified page source file fetch request carries a target page content identifier corresponding to the target page content; a content receiving sub-module, configured to receive the target page content of the second page returned in response to the page source file fetch request.

In an implementation, the page content acquisition module further comprises: a cache determination sub-module, configured to, before invoking the first API to modify the page source file fetch request, determine that the target page content corresponding to the second page does not exist in a cache associated with the page loader. The method further comprises: a cache storage module, configured to save the target page content of the second page into the cache of the page loader.

In an implementation, the page content acquisition module comprises: a cache extraction sub-module, configured to, when the target page content of the second page exists in the cache corresponding to the page loader, extract the target page content from the cache.

In an implementation, the method further comprises: a request modification module, configured to, in response to satisfying the acquisition condition for page content, invoke the first API to configure the page source file fetch request to simultaneously request target page content, and send the configured page source file fetch request; a cache storage module, configured to save the target page content of the second page returned in response to the page source file fetch request into the cache of the page loader.

In an implementation, the acquisition condition for page content includes at least one of the following: detecting that a page focus point is located at the position of a first type of data object in the first page; detecting that a second type of data object satisfying an interaction condition exists in the first page.

In an implementation, the content replacement module comprises: a content acquisition module, configured to acquire the target page content returned based on the configured page source file fetch request; a content processing sub-module, configured to delete or hide page content corresponding to the target page content identifier in the DOM tree instance of the first page, and fill the target page content into the content region corresponding to the target page element.

In an implementation, the page loading module comprises: a hydration sub-module, configured to perform a hydration operation on the replaced DOM tree instance so that the hydrated DOM tree instance can be loaded as an interactive page; an animation loading sub-module, configured to invoke a second API in the page loader to load animation effects from a cascading style sheet; an instance loading sub-module, configured to load the second page based on the hydrated DOM tree instance.

In an implementation, the page association condition satisfied by the first page before the jump and the second page after the jump comprises: the first page before the jump and the second page after the jump respectively correspond to a set page type.

In an implementation, the method further comprises: a page modification module, configured to, upon determining that the first page before the jump and the second page after the jump satisfy the page association condition, if the first page belongs to a multi-page application, configure the multi-page application as a single-page application.

### Eighth Embodiment:

Corresponding to the above examples and method embodiments provided by the embodiments of the present disclosure, the embodiments of the present disclosure further provide a page content providing apparatus. FIG. 11 illustrates a structural block diagram of a page content providing apparatus 1100, which may be deployed on a server side, and the apparatus 1100 may include:
a fetch request receiving module 1101, configured to receive a page source file fetch request, where the page source file fetch request is configured to simultaneously acquire target page content of the second page; a page content return module 1102, configured to return target page content according to the page source file fetch request, where the target page content is used for, in response to a page jump instruction, upon determining that the first page before the jump and the second page after the jump satisfy a page association condition, replacing at the corresponding position of the DOM tree instance rendered by the first page, so as to load the second page based on the replaced DOM tree instance.

In an embodiment, the page content return module comprises: a page content extraction sub-module, configured to extract the target page content from the page source file of the second page according to the target page content identifier indicated by the page source file fetch request; a file return sub-module, configured to encapsulate the target page content as a JSON file and return it together with the page source file to the page loader.

In an embodiment, the page content return module further comprises: a cache determination sub-module, configured to, before extracting the target page content from the page source file of the second page according to the target page content identifier indicated by the page source file fetch request, determine that the target page content corresponding to the second page does not exist in the server-side local cache;
The apparatus further comprises: a cache module, configured to save the target page content corresponding to the second page into the cache of the front-end server.

### Ninth Embodiment:

Corresponding to the above examples and method embodiments provided by the embodiments of the present disclosure, the embodiments of the present disclosure further provide a page file acquisition apparatus. FIG. 12 illustrates a structural block diagram of the page file acquisition apparatus 1200 of an embodiment of the present disclosure, and the apparatus 1200 may comprise:
a request configuration module 1201, configured to, in response to satisfying an acquisition condition for page content, invoke a first API to configure a page source file fetch request to simultaneously request target page content of the second page; a content acquisition module 1202, configured to acquire the target page content returned in response to the configured page source file fetch request, where the target page content is used for, in response to a page jump instruction, upon determining that the first page before the jump and the second page after the jump satisfy a page association condition, replacing at the corresponding position of the DOM tree instance rendered by the first page so as to load the second page based on the replaced DOM tree instance.

### Tenth Embodiment:

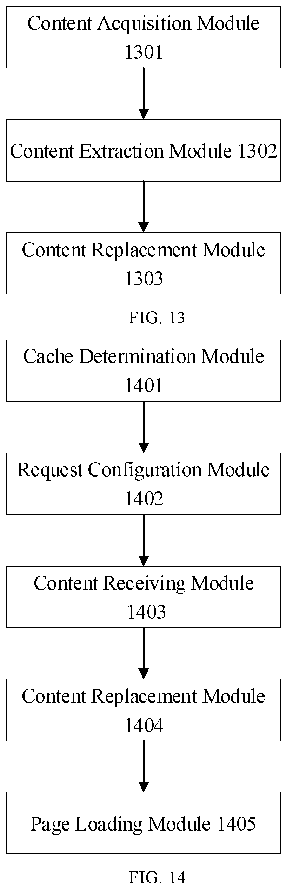

Corresponding to the above examples and method embodiments provided by the embodiments of the present disclosure, the embodiments of the present disclosure further provide a page jump processing apparatus. FIG. 13 illustrates a structural block diagram of the page jump processing apparatus 1300 of an embodiment of the present disclosure, and the apparatus 1300 may comprise:
a content acquisition module 1301, configured to, while displaying the first page, in response to satisfying an acquisition condition for page content, acquire target page content of other pages and save the target page content in the cache of the page loader; a content extraction module 1302, configured to, in response to a page jump instruction, upon determining that the first page before the jump and the second page after the jump satisfy a page association condition, extract the target page content of the second page from the cache of the page loader; a content replacement module 1303, configured to replace the returned target page content at the corresponding position of the DOM tree instance rendered by the first page; a page loading module 1304, configured to load the second page based on the replaced DOM tree instance.

### Eleventh Embodiment:

Corresponding to the above examples and method embodiments provided by the embodiments of the present disclosure, the embodiments of the present disclosure further provide a page jump processing apparatus. FIG. 14 illustrates a structural block diagram of the page jump processing apparatus 1400 of an embodiment of the present disclosure, and the apparatus 1400 may comprise:
a cache determination module 1401, configured to, in response to a page jump instruction, upon determining that a first page before the jump and a second page after the jump satisfy a page association condition, determine that target page content of the second page does not exist in a cache of a page loader; a request configuration module 1402, configured to configure a page source file fetch request to simultaneously fetch the target page content of the second page; a content receiving module 1403, configured to receive the target page content of the second page returned in response to the page source file fetch request; a content replacement module 1404, configured to replace the acquired target page content into a corresponding position of a DOM tree instance rendered by the first page; a page loading module 1405, configured to load the second page based on the replaced DOM tree instance.

### Twelfth Embodiment:

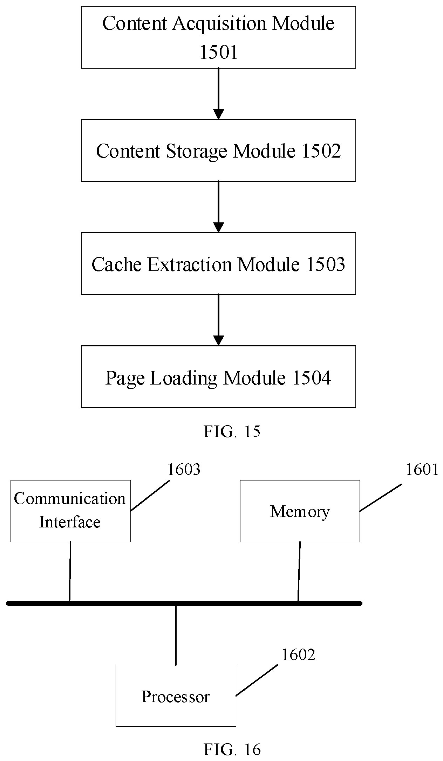

Corresponding to the above examples and method embodiments provided by the embodiments of the present disclosure, the embodiments of the present disclosure further provide a page jump processing apparatus. FIG. 15 illustrates a structural block diagram of the page jump processing apparatus 1500 of an embodiment of the present disclosure, and the apparatus 1500 may comprise:
a content acquisition module 1501, configured to, while displaying the first product detail page, in response to satisfying an acquisition condition for page content of other product detail pages, acquire main body content of at least one other product detail page; a content storage module 1502, configured to save the main body content in the cache of the page loader; a cache extraction module 1503, configured to, in response to a page jump instruction, upon determining that the page after the jump is the second product detail page, extract the main body content of the second product detail page from the cache of the page loader; a page loading module 1504, configured to load the second product detail page based on the acquired main body content.

The functions of each module in each apparatus of the embodiments of the present disclosure may be referred to in the corresponding descriptions in the above methods, and have corresponding beneficial effects, which will not be repeated here.

FIG. 16 is a block diagram of an electronic device for implementing the embodiments of the present disclosure. As shown in FIG. 16, the electronic device comprises: a memory 1601 and a processor 1602, where the memory 1601 stores a computer program executable on the processor 1602. The processor 1602, when executing the computer program, implements the methods in the above embodiments. The number of the memory 1601 and the processor 1602 may each be one or more.

The electronic device further comprises: a communication interface 1603, configured to communicate with external devices and perform data exchange and transmission.

If the memory 1601, the processor 1602, and the communication interface 1603 are implemented independently, the memory 1601, the processor 1602, and the communication interface 1603 may be interconnected and communicate with each other via a bus. The bus may be an Industry Standard Architecture (ISA) bus, a Peripheral Component Interconnect (PCI) bus, an Extended Industry Standard Architecture (EISA) bus, or the like. The bus may be divided into an address bus, a data bus, a control bus, and the like. For ease of representation, only one thick line is used in FIG. 16, but this does not indicate that there is only one bus or one type of bus.

Optionally, in terms of specific implementation, if the memory 1601, the processor 1602, and the communication interface 1603 are integrated on a single chip, the memory 1601, the processor 1602, and the communication interface 1603 may communicate with each other through an internal interface.

The embodiments of the present disclosure provide a computer-readable storage medium storing a computer program, which, when executed by a processor, implements the methods provided in the embodiments of the present disclosure.

The embodiments of the present disclosure further provide a computer program product comprising a computer program, which, when executed by a processor, implements the methods provided in any one of the embodiments of the present disclosure.

The embodiments of the present disclosure further provide a chip comprising a processor, configured to invoke and execute instructions stored in a memory, so that a communication device having the chip installed therein executes the methods provided in the embodiments of the present disclosure.

The embodiments of the present disclosure further provide a chip, comprising: an input interface, an output interface, a processor, and a memory, where the input interface, the output interface, the processor, and the memory are connected to each other through an internal connection pathway, and the processor is configured to execute code stored in the memory, and when the code is executed, the processor is configured to execute the methods provided in the present disclosure's embodiments.

It should be understood that the above-mentioned processor may be a Central Processing Unit (CPU), or may be another general-purpose processor, a Digital Signal Processor (DSP), an Application Specific Integrated Circuit (ASIC), a Field Programmable Gate Array (FPGA) or other programmable logic device, a discrete gate or transistor logic device, a discrete hardware component, or the like. A general-purpose processor may be a microprocessor or any conventional processor. It is worth noting that the processor may be a processor supporting an Advanced RISC Machines (ARM) architecture.

Further, optionally, the above-mentioned memory may include read-only memory and random access memory. The memory may be volatile memory or non-volatile memory, or may include both volatile and non-volatile memory. The non-volatile memory may include Read-Only Memory (ROM), Programmable Read-Only Memory (PROM), Erasable Programmable Read-Only Memory (EPROM), Electrically Erasable Programmable Read-Only Memory (EEPROM), or flash memory. The volatile memory may include Random Access Memory (RAM), which is used as an external cache. By way of illustrative but non-limiting example, many forms of RAM are available. For example, Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced Synchronous Dynamic Random Access Memory (ESDRAM), Sync Link Dynamic Random Access Memory (SLDRAM), and Direct Rambus Random Access Memory (DR RAM).

In the above embodiments, the implementation may be wholly or partially realized by software, hardware, firmware, or any combination thereof. When implemented using software, the implementation may be wholly or partially realized in the form of a computer program product. The computer program product includes one or more computer instructions. When the computer program instructions are loaded and executed on a computer, the processes or functions in accordance with the present disclosure are wholly or partially produced. The computer may be a general-purpose computer, a special-purpose computer, a computer network, or other programmable device. The computer instructions may be stored in a computer-readable storage medium, or transmitted from one computer-readable storage medium to another computer-readable storage medium.

In the description of the present disclosure, reference to descriptions of the terms "one embodiment," "some embodiments," "an example," "a specific example," or "some examples," etc., means that specific features, structures, materials, or characteristics described in connection with the embodiment or example are included in at least one embodiment or example of the present disclosure. Moreover, the specific features, structures, materials, or characteristics described may be combined in any suitable manner in any one or more embodiments or examples. In addition, those skilled in the art may combine and integrate different embodiments or examples described in the present disclosure, as well as features of different embodiments or examples, without contradiction.

Furthermore, the terms "first" and "second" are used for descriptive purposes only and are not to be construed as indicating or implying relative importance or implicitly specifying the quantity of the indicated technical feature. Thus, a feature defined as "first" or "second" may explicitly or implicitly include at least one such feature. In the description of the present disclosure, the meaning of "plurality" is two or more, unless otherwise explicitly and specifically defined.

Any process or method described in a flowchart or described otherwise herein may be understood as representing a module, segment, or portion of code comprising one or more executable instructions for implementing specific logical functions or steps of a process. Furthermore, the scope of preferred implementations of the present disclosure includes additional implementations in which functions may be executed out of the order shown or discussed, including in a substantially simultaneous manner or in reverse order depending on the functions involved.

The logic and/or steps described in the flowcharts or otherwise described herein, for example, may be considered as an ordered list of executable instructions for implementing logical functions, and may be specifically implemented in any computer-readable medium for use by, or in connection with, an instruction execution system, apparatus, or device (such as a computer-based system, a system including a processor, or other system that can fetch and execute instructions from an instruction execution system, apparatus, or device).

It should be understood that each part of the present disclosure may be implemented by hardware, software, firmware, or a combination thereof. In the above implementations, a plurality of steps or methods may be implemented by software or firmware stored in a memory and executed by a suitable instruction execution system. All or some of the steps of the methods of the above embodiments may be completed by instructing relevant hardware through a program, and the program may be stored in a computer-readable storage medium. When the program is executed, it includes one or a combination of the steps of the method embodiments.

Furthermore, each functional unit in each embodiment of the present disclosure may be integrated into one processing module, or each unit may exist physically and separately, or two or more units may be integrated into one module. The above-mentioned integrated module may be implemented in the form of hardware or in the form of a software functional module. When the above-mentioned integrated module is implemented in the form of a software functional module and sold or used as an independent product, it may also be stored in a computer-readable storage medium. The storage medium may be a read-only memory, a magnetic disk, an optical disc, or the like.

The above description represents only exemplary embodiments of the present disclosure, but the protection scope of the present disclosure is not limited thereto. Any person skilled in the art can easily conceive of various changes or substitutions within the technical scope disclosed in the present disclosure, and these should all be covered within the protection scope of the present disclosure. Therefore, the protection scope of the present disclosure shall be subject to the protection scope of the claims.

## Claims

1. A method for processing a page jump, applied to a page loader, the method comprising:
in response to a page jump instruction, upon determining that a first page before the jump and a second page after the jump satisfy a page association condition, acquiring target page content of the second page; wherein the target page content is obtained by sending a page source file fetch request, and the page source file fetch request is configured to simultaneously acquire the target page content of the second page;
replacing the acquired target page content into a corresponding position of a Document Object Model (DOM) tree instance rendered by the first page;
loading the second page based on the replaced DOM tree instance.

2. The method of claim 1, wherein acquiring the target page content of the second page comprises:
invoking a first API to modify the page source file fetch request, so that the page source file fetch request requests acquisition of the target page content of the second page while requesting acquisition of the page source file, wherein the modified page source file fetch request carries a target page content identifier corresponding to the target page content;
receiving the target page content of the second page returned in response to the page source file fetch request.

3. The method of claim 2, wherein before the invoking the first API to modify the page source file fetch request, the acquiring the target page content of the second page further comprises:
determining that the target page content corresponding to the second page does not exist in a cache associated with the page loader;
after the acquiring the target page content of the second page, the method further comprises:
saving the target page content of the second page into a cache of the page loader.

4. The method of claim 1, wherein acquiring the target page content of the second page comprises:
in a case where the target page content of the second page exists in a cache corresponding to the page loader, extracting the target page content from the cache.

5. The method of claim 4, wherein the method further comprises:
in response to satisfying an acquisition condition for page content, invoking a first API to configure a page source file fetch request to simultaneously request target page content, and sending the configured page source file fetch request;
saving the target page content of a second page returned in response to the page source file fetch request into a cache of the page loader.

6. The method of claim 5, wherein the acquisition condition for page content comprises at least one of the following:
detecting that a page focus point is located at a position of a first type of data object in the first page;
detecting that a second type of data object satisfying an interaction condition exists in the first page.

7. The method of any one of claims 1-6, wherein the replacing the acquired target page content into a corresponding position of the DOM tree instance rendered by the first page comprises:
acquiring the target page content returned according to the configured page source file fetch request;
deleting or hiding page content corresponding to a target page content identifier in the DOM tree instance of the first page, and filling the target page content into a content region corresponding to the target page element.

8. The method of any one of claims 1-7, wherein the loading the second page based on the replaced DOM tree instance comprises:
performing a hydration operation on the replaced DOM tree instance so that the hydrated DOM tree instance corresponds to and is loadable as an interactive page;
invoking a second API in the page loader to load animation effects from a cascading style sheet (CSS);
loading the second page based on the hydrated DOM tree instance.

9. The method of any one of claims 1-8, wherein the determining that the first page before the jump and the second page after the jump satisfy a page association condition comprises:
determining that the first page before the jump and the second page after the jump each correspond to a set page type.

10. The method of claim 9, wherein the method further comprises:
in a case where it is determined that the first page before the jump and the second page after the jump satisfy the page association condition, if the first page belongs to a multi-page application (MPA), configuring the multi-page application as a single-page application (SPA).

11. A method for providing page content, applied to a server side, the method comprising:
receiving a page source file fetch request, wherein the page source file fetch request is configured to simultaneously acquire target page content of a second page;
returning target page content according to the page source file fetch request, wherein the target page content is used for, in response to a page jump instruction, in a case where it is determined that a first page before the jump and the second page after the jump satisfy a page association condition, replacing at a corresponding position of a Document Object Model (DOM) tree instance rendered by the first page, so as to load the second page based on the replaced DOM tree instance.

12. The method of claim 11, wherein the returning target page content according to the page source file fetch request comprises:
extracting the target page content from the page source file of the second page according to the target page content identifier indicated by the page source file fetch request;
encapsulating the target page content into a JavaScript Object Notation (JSON) file and returning the JSON file together with the page source file to a page loader.

13. The method of claim 12, wherein, before the extracting the target page content from the page source file of the second page according to the target page content identifier indicated by the page source file fetch request, the returning target page content according to the page source file fetch request further comprises:
determining that the target page content corresponding to the second page does not exist in a server-side local cache;
the method further comprises:
saving the target page content corresponding to the second page into a cache of a front-end server.

14. A method for acquiring page files, the method comprising:
in response to satisfying an acquisition condition for page content, invoking a first API to configure a page source file fetch request to simultaneously request target page content of a second page;
acquiring the target page content returned in response to the configured page source file fetch request, wherein the target page content is used for, in response to a page jump instruction, in a case where it is determined that a first page before the jump and the second page after the jump satisfy a page association condition, replacing at a corresponding position of a Document Object Model (DOM) tree instance rendered by the first page, so as to load the second page based on the replaced DOM tree instance.

15. A method for processing a page jump, comprising:
in response to satisfying an acquisition condition for page content while displaying a first page, acquiring target page content of other pages and saving the target page content in a cache of a page loader;
in response to a page jump instruction, upon determining that the first page before the jump and a second page after the jump satisfy a page association condition, extracting the target page content of the second page from the cache of the page loader;
replacing the returned target page content at a corresponding position of a Document Object Model (DOM) tree instance rendered by the first page;
loading the second page based on the replaced DOM tree instance.

16. A method for processing a page jump, comprising:
in response to a page jump instruction, upon determining that a first page before the jump and a second page after the jump satisfy a page association condition, determining that target page content of the second page does not exist in a cache of a page loader;
configuring a page source file fetch request to simultaneously acquire the target page content of the second page, and receiving the target page content of the second page returned in response to the page source file fetch request;
replacing the acquired target page content at a corresponding position of a Document Object Model (DOM) tree instance rendered by the first page;
loading the second page based on the replaced DOM tree instance.

17. A method for processing a page jump, comprising:
in response to satisfying an acquisition condition for page content of other product detail pages while displaying a first product detail page, acquiring main body content of at least one other product detail page and saving the main body content in a cache of a page loader;
in response to a page jump instruction, upon determining that the page after the jump is a second product detail page, extracting the main body content of the second product detail page from the cache of the page loader;
loading the second product detail page based on the acquired main body content.

18. An electronic device comprising a memory, a processor, and a computer program stored on the memory, wherein the processor, when executing the computer program, implements the method of any one of claims 1-17.

19. A computer-readable storage medium having a computer program stored therein, wherein the computer program, when executed by a processor, implements the method of any one of claims 1-17.

20. A computer program product comprising computer program/instructions, wherein the computer program/instructions, when executed by a processor, implement the method of any one of claims 1-17.
